# EUROPEAN PATENT SPECIFICATION

(11) **EP 2 018 072 B1**
(45) Date of publication and mention of the grant of the patent: **21.11.2012**
(21) Application number: 07710859.5
(22) Date of filing: 29.01.2007
(51) Int. Cl.: H04W 76/02

(54) **A METHOD, DEVICE AND SYSTEM FOR CHANNEL CONFIGURATION**
VERFAHREN, EINRICHTUNG UND SYSTEM ZUR KANALKONFIGURATION
PROCÉDÉ, DISPOSITIF ET SYSTÈME DE CONFIGURATION DE CANAL

(30) Priority: 21.04.2006 CN 200610074501; 30.04.2006 CN 200610079635
(43) Date of publication of application: 21.01.2009
(73) Proprietor: Huawei Technologies Co., Ltd., Longgang District, Shenzhen Guangdong 518129 (CN)
(72) Inventor: YANG, Jianjun, Guangdong 518129 (CN); QU, Bingyun, Guangdong 518129 (CN); CHEN, Bin, Guangdong 518129 (CN); ZHUANG, Hongcheng, Guangdong 518129 (CN)
(74) Representative: Kreuz, Georg Maria
(86) International application number: PCT/CN2007/000321
(87) International publication number: WO 2007/121645

(56) References cited:
- EP-A- 1 317 160
- EP-A- 1 339 186
- EP-A1- 1 575 190
- WO-A-98/52296
- CN-A- 1 354 571
- CN-A- 1 396 744
- CN-A- 1 741 467
- US-A1- 2003 147 371
- US-A1- 2005 221 835
- "3rd Generation Partnership Projekt; Technical Specification Group Core Network and Terminals; Mobile radio interface Layer 3 specification; Core network protocols; Stage 3 (3GPP TS 24.008 version 7.0.0 Release 7)" 3GPP TS 24.008 V7.0.0, XX, XX, 1 June 2005 (2005-06-01), pages 159-204, XP002374190

## Description

### Field of the Invention

The invention relates to the field of mobile communications, and in particular, to a method, device and system for channel configuration.

### Background of the Invention

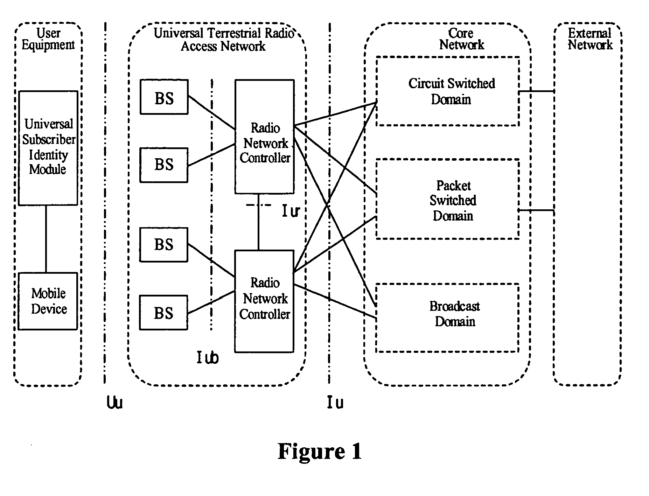

In the field of mobile communications, a Wideband Code Division Multiple Access (WCDMA) system provides the access and transmission of Broadcast (BC) domain, Circuit Switched (CS) domain, and Packet Switched (PS) domain. At present, the BC domain provides broadcasting within the system, the CS domain provides the access and transmission of circuit switched services (mostly voice services), and PS domain provides the access and transmission of packet switched services (mostly IP packets). Figure 1 shows the structure of a WCDMA system.

A user equipment (UE) (e.g. a mobile station) usually works in one of two basic modes, i.e. an idle mode and a connection mode. The so-called idle mode means that the UE is in a standby state, i.e. a no-service state. The so-called connection mode means that the UE is in a state in which the Radio Resource Control (RRC) connection has been established between the UE and a Radio Network Controller (RNC). At this time, the UE is in a cell. In addition, in the connection mode, the UE usually has 4 status including Cell Dedicated Channel (CELL_DCH) status, Cell Forward Access Channel (CELL_FACH) status, Cell Paging Channel (CELL_PCH) status, and Universal Terrestrial Radio Access Network Paging Channel (URA_PCH) status.

The CELL_DCH status is a status in which the UE has a dedicated control channel (DCCH) and a dedicated traffic channel (DTCH) and communicates by using the dedicated (or shared) channels.

The CELL_FACH status is a status in which the UE has the DCCH and DTCH and can receive data in the forward access channel (FACH), transmit data in the random access channel (RACH) and transfer messages in the common FACH/RACH channels without the need of allocating dedicated channels.

The CELL_PCH status is a status in which the UE can not utilize the DCCH and DTCH, but listens to the paging indicator channel (PICH) in the downlink. The UE may transmit CELL Update (update of cell) messages to the RNC.

The URA_PCH status is a status in which the UE can not utilize the DCCH and DTCH and can not transmit or receive data, but listens to the paging indicator messages on the PICH channel in the downlink. The UE may transmit URA Update (Update of registration area of Universal Terrestrial Radio Access Network) messages and CELL Update messages to the RNC.

In the connection mode, the transition between the statuses of the UE is decided by the radio network controller according to its radio resource managing and scheduling algorithm.

In general, the radio network controller allocates dedicated channels to a UE when the UE performs CS domain services. At this time, the UE is in the CELL_DCH status. When the UE performs PS domain services, if the service traffic is relatively small, the radio network controller does not allocate dedicated channels to the UE so that the UE is put in the CELL_FACH status, and if the service traffic is relatively heavy, the radio network controller allocates dedicated channels to the UE. Generally, during the PS services, the UE may have no uplink or downlink data transmission sometimes. At these times, the radio network controller may cause the UE to enter the CELL_PCH or URA_PPCH status. When entering the CELL_PCH or URA_PPCH status from the CELL_FACH or CELL_DCH status, the UE listens to the information of the paging indicator channel (PICH), but can not transmit and receive data. The purpose of keeping the UE in the CELL_PCH status is to save the power consumption of the UE and maintain the RRC connection and the connection with the core network (CN) to shorten the time for establishing the radio bearer and resuming the data transmission.

In addition, the introduction of the URA_PCH status is to further reduce the signaling message flow due to the cell update. If the UE has not service flow for a long time, the UE enters the URA_PCH status. Universal terrestrial radio access network registration area (URA) usually includes a plurality of cells. When the UE is in the URA_PCH status, if the UE enters another cell within the same URA, the cell update process is not be initiated, so that the radio resources may be saved. The working mode of the UE is transparent to the core network.

In the existing 3GPP standards, after an UE initiates a PS domain service, since there is no data transmission temporally or for the purpose of being online always, the UE enters the CELL_PCH or URA_PCH status to initiate a CS domain call. Figure 2 and Figure 3 show the process as stated. Figures 4 and 5 show the process of initiating a CS domain call by the US after the US enters the CELL_FACH status. The processes are described below with reference to the figures.

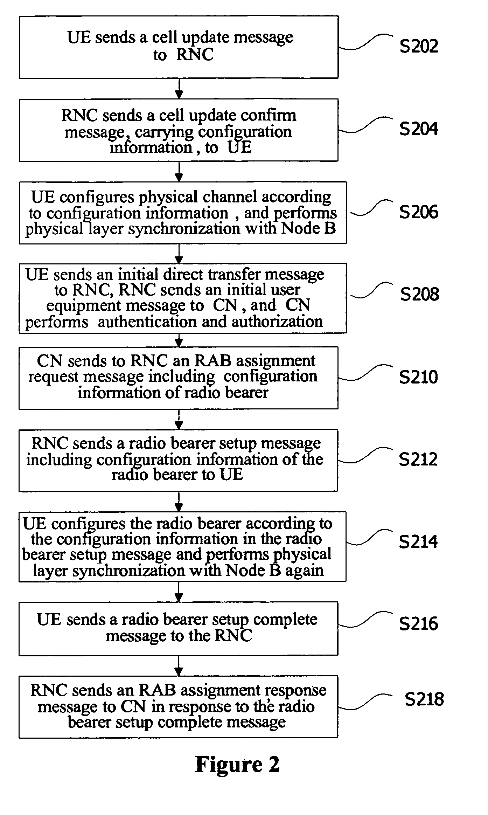

Figure 2 is a flow chart showing the process of initiating a CS domain call by the UE in the CELL_PCH or URA_PCH status.

First in step S202, the UE sends a cell update message to the RNC. In step S204, the RNC sends a cell update confirm message, carrying configuration information, to the UE in response to the received cell update message. In step S206, the UE configures a physical channel according to the configuration information, and performs physical layer synchronization with the base station (Node B). In step S208, the UE sends an initial direct transfer message to the RNC, and the RNC sends an initial UE message to the CN in response to the received initial direct transfer message, and the CN performs the processes such as authentication and authorization.

In step S210, the CN sends to the RNC a radio access bearer (RAB) assignment request message including the relevant configuration information of radio access bearer to be established for service data transmission. In step S212, the RNC sends a radio bearer setup message including the configuration information of the radio bearer to the UE according to the relevant configuration information of the radio access bearer. In step S214, the UE configures the physical channel according to the configuration information of the radio bearer and performs physical layer synchronization with the base station again.

In step S216, the UE sends a radio bearer setup complete message to the RNC. In the step S218, the RNC sends an RAB assignment response message to the CN in response to the received radio bearer setup complete message.

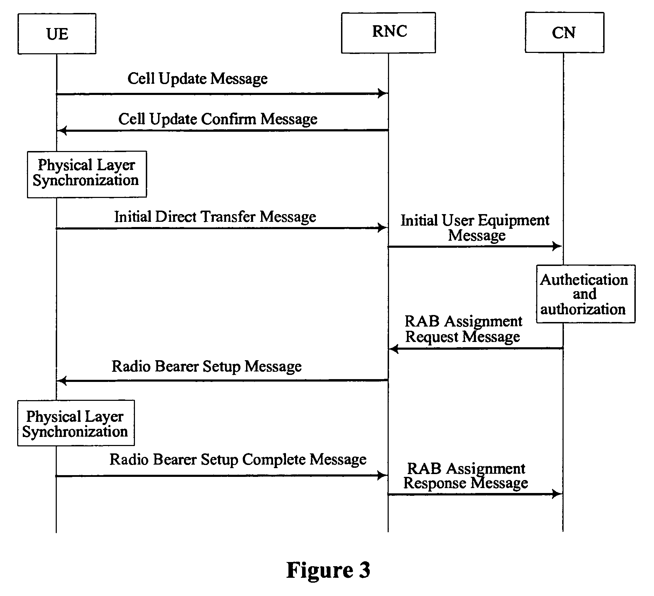

The signaling flow chart of the above process is as shown in Figure 3. That is, Figure 3 is a signaling flow chart showing the process of initiating the CS domain call by the UE in the CELL_PCH or URA_PCH status.

As can be seen, since the RNC does not know the type of the CS domain call to be established during the cell update, the RNC can not allocate the radio resources for the call session in advance and can not pre-configure the physical channel resources used by the radio bearer for service data transmission in the cell update confirm message. This configuration can be done by the RNC only in the subsequent radio bearer setup message. In this way, the UE is required to perform the physical channel configuration and physical layer synchronization twice, i.e. one time in the step S202 of cell update and another time in the step S214 for radio bearer setup. The establishment of the call is delayed due to the time required in the physical layer synchronization (about 160ms). This can deteriorate the user's service experience and can thus reduce the user's satisfaction.

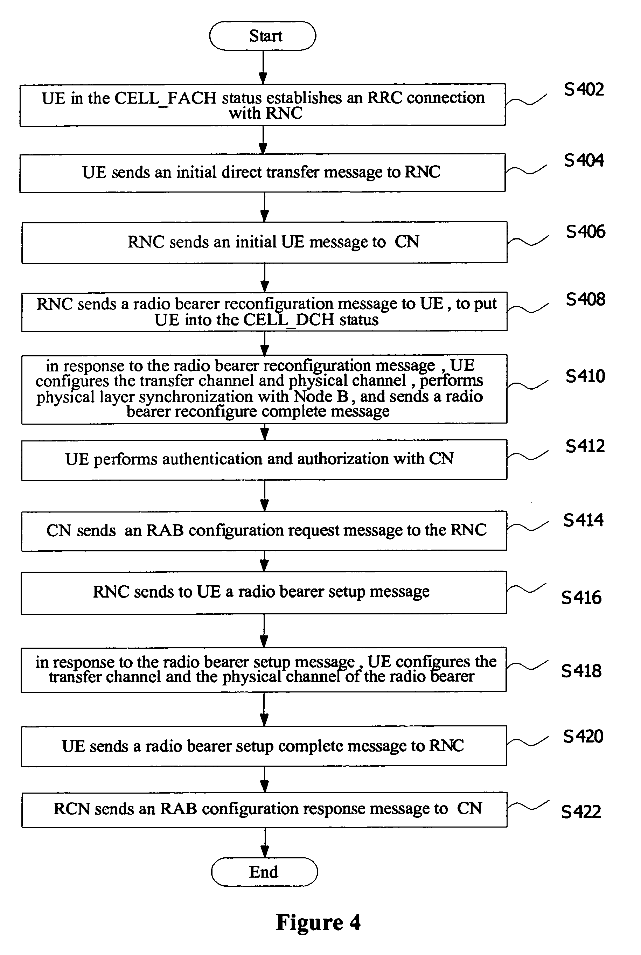

Figure 4 is a flow chart showing the process of initiating a CS domain call by the UE in the CELL_FACH status.

As shown in Figure 4, in step S402, the UE in the CELL_FACH status establishes an RRC connection with the RNC. In step S404, the UE sends an initial direct transfer message to the RNC. The initial direct transfer message is used for the reason for establishing the call (the voice call initiated this time) and carries the information of Non Access Stratum (NAS). In step S406, the RNC sends an initial UE message to the CN to forward the above information of NAS to the CN. In step S408, the RNC sends a radio bearer reconfiguration message to the UE, to put the UE into the CELL_DCH status. The radio bearer reconfiguration message carries configuration information. The configuration information is used to configure only the dedicated transfer channel and the dedicated physical channel resources used for signaling radio bearer (SRB), and to map the SRB to the dedicated transfer channel.

In step S410, in response to the radio bearer reconfiguration message, the UE configures the transfer channel and physical channel according to the configuration information of the channels included in the radio bearer reconfiguration message, and performs physical layer synchronization with the Node B, and sends a radio bearer reconfigure complete message to the RNC. In step S412, the UE performs the authentication and authorization with the CN.

In step S414, the CN sends to the RNC a radio access bearer (RAB) configuration request message containing the relevant configuration information of radio bearer to be setup for service data transmission. In step S416, in response to the RAB configuration request message, the RNC sends to the UE a radio bearer setup message containing configuration information of the radio bearer. In this step, the transfer channel and physical channel resources required by the radio bearer are also configured. Since the physical layer resources setup in this step S416 is different from the resources setup in the step S308, the radio bearer may be setup in radio synchronization manner. The system is relatively simple, and the radio resources are not wasted. In step S418, in response to the radio bearer setup message, the UE configures the transfer channel and the physical channel of the radio bearer according to the configuration information in the radio bearer setup message, and performs physical layer synchronization with the Node B.

In step S420, the UE sends a radio bearer setup complete message to the RNC. In step S422, the RCN sends an RAB configuration response message to the CN in response to the radio bearer setup complete message.

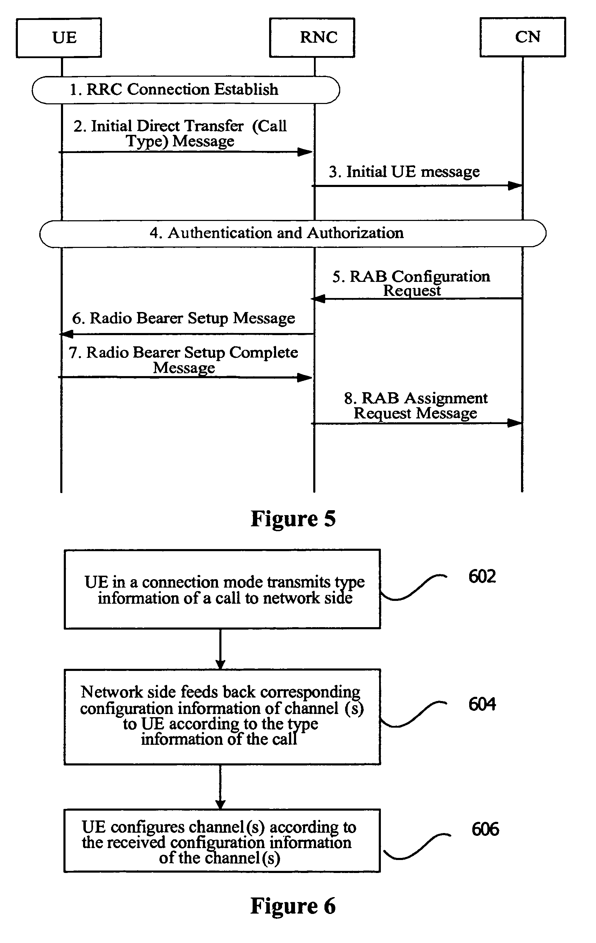

The signaling flow chart of the above process is shown in Figure 5. That is, Figure 5 shows a signaling flow chart showing the process of initiating the CS domain call by the UE in the CELL_FACH status.

As can be seen from the above description of the process of initiating the CS domain call by the UE in the CELL_FACH status in the related art, after the UE sends the initial direct transfer message to the RNC, the RNC changes the status of the UE to be CELL_DCH according to the reason of establishing the call. However the RNC does not know the type of the CS call to be established by the UE, therefore the RNC can not pre-configure the physical resources for the radio bearer in step S408. Accordingly, in the subsequent step S416, a synchronous method for the radio bearer setup has to be adopted (that is, the UE and the Node B are required to switch to the new radio bearer at a time appointed by both of the UE and Node B). This increases the delay in establishing the call. In this case, if an asynchronous (i.e. non-synchronous) method for the radio bearer setup is adopted, the processing of the UE and the Node B will be very complicated, which results in a waste of the radio resources and a further degradation of the system performance.
EP 1339186 A1 discloses a method for enhancing the channel utilisation in a CDMA system, in the method, a MS transmits service type information to the network side for configuring channel.
3GPP TS 24.008 version 7.0.0 Release 7 is about the introduction of call establishment, section 5.3.6.1 and 5.3.6.2.1 disclose a MS transmits required call type to the network side for channel bearer configuration.
US 2003/147371 A1 discloses a method for transmitting a serving HS-SCCH set information, in the method, the initial direct transfer message used by the UE to transmit a new call setup request to the RNC is included in a NAS message, the NAS message include call quality information.
WO 98/52296 A2 discloses a bandwidth system for managing calls between a central terminal and a subscriber terminal, the allocated channel bandwidth is determined based on information about the type of call to be established which is included in call data received from a MS.

In view of this, the disadvantages of the existing technologies lie in that: when the UE initiates a CS domain call, the RNC does not know the type of the CS call to be established by the UE and therefore can not pre-configure the physical resources for the radio bearer, no matter whether the UE is in the CELL_PCH or URA_PCH status or in the CELL_FACH status when initiating the CS domain call. The RNC has to configure the physical resources in the subsequent radio bearer setup message. In this way, the UE is required to perform the physical channel configuration and the physical layer synchronization with the Node B twice. In addition, this increases the delay in establishing the CS domain call. In this case, if an asynchronous method is adopted, the processing of the UE and the Node B will be very complicated, resulting in a waste of the radio resources and a degradation of user experience.

### Summary of the Invention

Embodiments of the invention are to provide a method, a device and a system for channel configuration, to solve the problem of delay when initiating a call by a UE in the existing technologies.

In view of this, an embodiment of the invention provides a method for channel configuration. The method includes:
receiving, by a radio network controller, type information of a call transmitted by a user equipment in a connection mode; and
sending, by the radio network controller, configuration information of a channel to the user equipment according to the type information of the call;
wherein the type information of the call is transmitted by the user equipment by using a cell update message or a universal terrestrial radio access network registration area update message.

In addition, another embodiment of the invention provides a method for channel configuration. The method includes:
transmitting, by a user equipment in a connection mode, type information of a call to a radio network controller; and
configuring, by the user equipment, a channel of the user equipment according to received configuration information of the channel fed back by the radio network controller;
wherein the type information of the call is transmitted by the user equipment by using a cell update message or a universal terrestrial radio access network registration area update message.

In addition, another embodiment of the invention provides a method for channel configuration. The method includes:
means for receiving type information of a call transmitted by a user equipment in a connection mode; and
means for sending configuration information of a channel to the user equipment according to the type information of the call;
wherein the type information of the call is transmitted by the user equipment by using a cell update message or a universal terrestrial radio access network registration area update message.

Accordingly, an embodiment of the invention provides a user equipment for channel configuration. The device includes:
a transmitting unit (161), adapted to transmit, in a connection mode, type information of a call to a radio network controller; and
a channel configuring unit (162), adapted to configure a channel of the user equipment according to received configuration information of the channel fed back by the radio network controller;
wherein the type information of the call is transmitted by the transmitting unit by using a cell update message or a universal terrestrial radio access network registration area update message.

In addition, another embodiment of the invention provides a radio network controller for channel configuration. The device includes:
means for transmitting an initial user equipment message to a core network according to the type information of the call; and
means for authenticating and authorize the received initial user equipment message and feeding back a radio access bearer assignment request message containing configuration information of radio bearer for service data transmission.

In addition, another embodiment of the invention provides a system for channel configuration. The system includes:
the user equipment is adapted to transmit, in a connection mode, type information of a call to a radio network controller and configure a channel of the user equipment according to received configuration information of the channel fed back by the radio network controller;
the radio network controller is adapted to receive type information of a call transmitted by the user equipment in a connection mode and send configuration information of a channel to the user equipment according to the type information of the call;
wherein the type information of the call is transmitted by the user equipment by using a cell update message or a universal terrestrial radio access network registration area update message.

In the above technical solutions, when initiating a CS domain call in CELL_PCH, URA_PCH or CELL_FACH status, the UE transmits the type information of the call to the network side. In this way, the network side may pre-allocate the channel resources to be used by the radio bearer according to the type of the call. In addition, the number of synchronization processes may be reduced, that is, the number of synchronization processes between the UE and Node B is reduced to one (which is two in the existing technologies). An asynchronous method is adopted in the subsequent process of radio bearer setup for the CS services, so that the time required by the UE for establishing the call may be shortened. In addition, the complicity of the system is reduced, thereby avoiding the waste of the radio resources.

### Brief Description of the Drawings

Figure 1 is a diagram illustrating the structure of a WCHMA system in the existing technology;

Figure 2 is a flow chart illustrating the process of initiating a CS domain call by a UE in the CELL_PCH or URA_PCH status;

Figure 3 is a signaling flow chart illustrating the process of initiating a CS domain call by the UE in the CELL_PCH or URA_PCH status;

Figure 4 is a flow chart illustrating the process of initiating a CS domain call by a UE in the CELL_FACH status;

Figure 5 is a signaling flow chart illustrating the process of initiating a CS domain call by the UE in the CELL_FACH status;

Figure 6 is a flow chart illustrating a method for channel configuration according to a first embodiment of the invention;

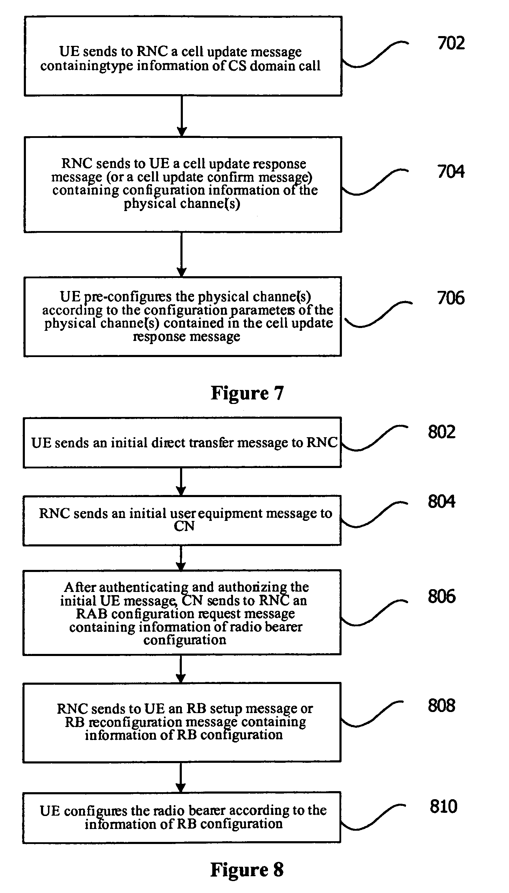

Figure 7 is a flow chart illustrating the process of establishing the physical channels according to the first embodiment of the invention;

Figure 8 is a flow chart illustrating the process for radio bearer setup based on the process as shown in Figure 7;

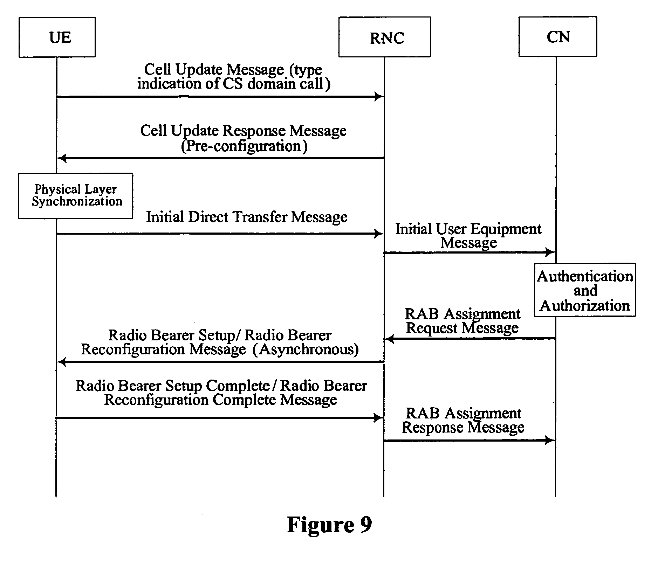

Figure 9 is a signaling flow chart illustrating the process of initiating a CS domain call by a UE in the CELL_PCH or URA_PCH status according to the first embodiment of the invention;

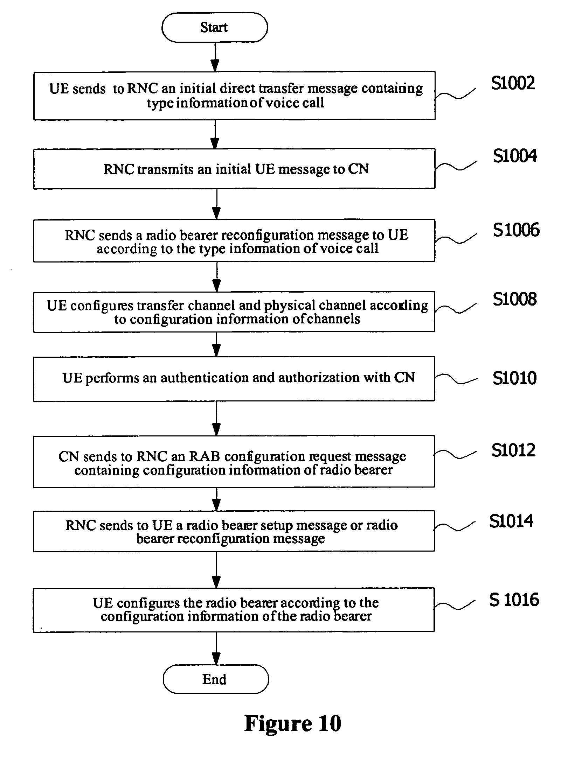

Figure 10 is a flow chart illustrating the process of initiating a CS domain call by a UE in the CELL_FACH status according to a third embodiment of the invention;

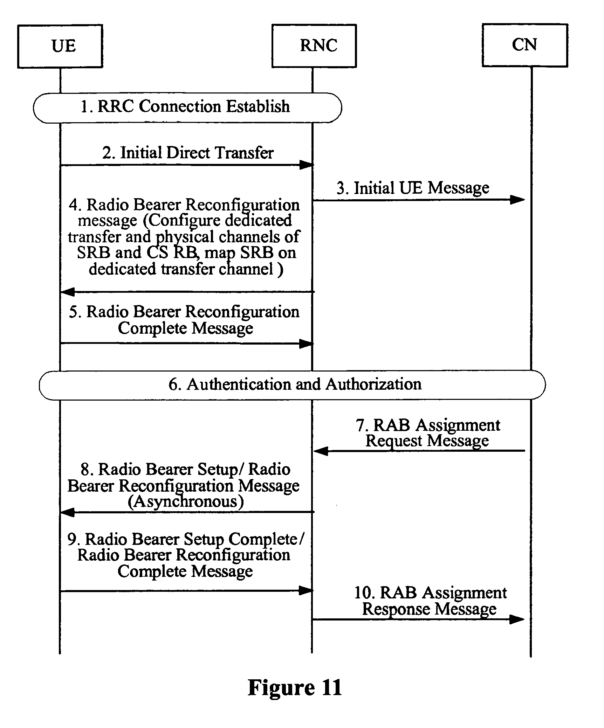

Figure 11 is a signaling flow chart illustrating the process of initiating the CS domain call by the UE in the CELL_FACH status as shown in Figure 10;

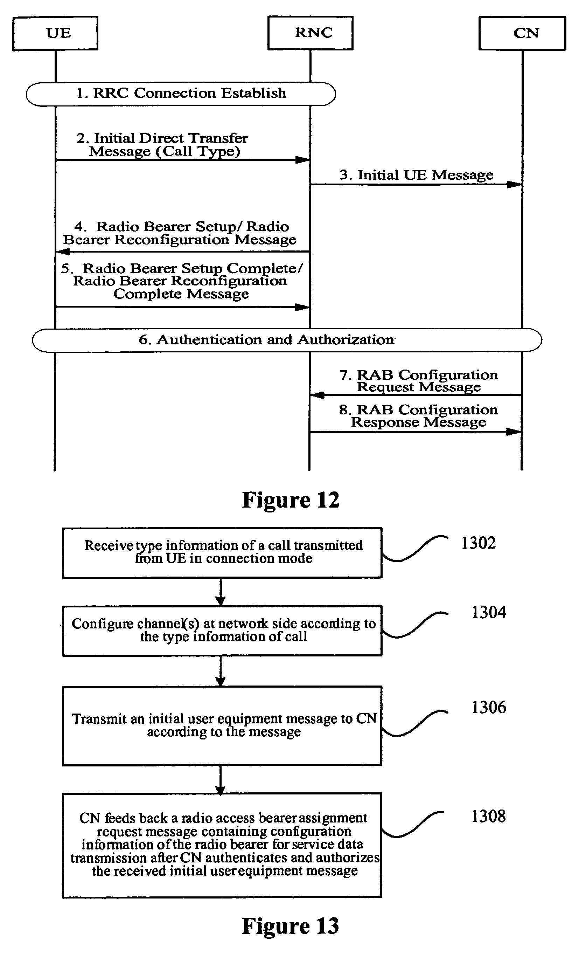

Figure 12 is another signaling flow chart illustrating the process of initiating the CS domain call by a UE in the CELL_FACH status according to a fourth embodiment of the invention;

Figure 13 is a flow chart illustrating a method for channel configuration according to a fifth embodiment of the invention;

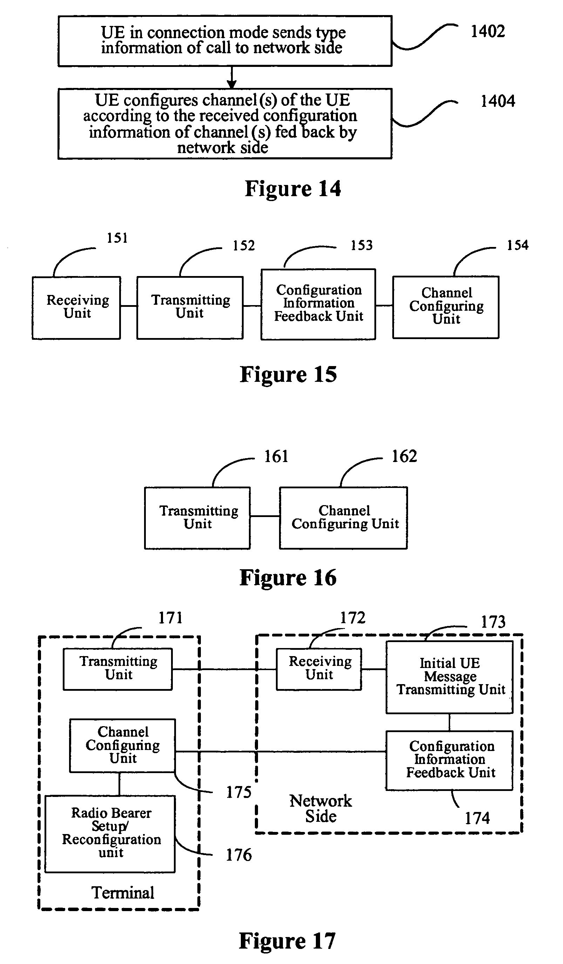

Figure 14 is a flow chart illustrating a method for channel configuration according to a sixth embodiment of the invention;

Figure 15 is a schematic diagram illustrating the structure of a device for channel configuration according to a seventh embodiment of the invention;

Figure 16 is a schematic diagram illustrating the structure of a device for channel configuration according to an eighth embodiment of the invention; and

Figure 17 is a schematic diagram illustrating the structure of a system for channel configuration according to a ninth embodiment of the invention.

### Detailed Description of the Embodiments

The invention is further described below with reference to the drawings and the embodiments.

Figure 6 is a flow chart illustrating a method for channel configuration according to an embodiment of the invention. As shown in Figure 6, the method for channel configuration includes the following steps.

Step 602: A UE in a connection mode transmits type information of a call to network side.

Step 604: The network side feeds back corresponding configuration information of a channel(s) to the UE according to the type information of the call.

Step 606: The UE configures a channel(s) according to the received configuration information of the channel(s).

To be better understood by the skilled in the art, the method is illustrated below with the process of initiating a CS domain call by the UE in the CELL_PCH or URA_PCH status as an example.

### First Embodiment

Figure 7 is a flow chart illustrating the process of establishing the physical channels according to the embodiment of the invention. As shown in Figure 7, in step S702, the UE sends a cell update message to the radio network controller (RNC). The cell update message includes type information of a CS domain call. The CS domain call is categorized into the following types: for example, CS domain speech (CS Speech) service and CS domain video telephone (CS Video) service. There are other types of CS domain call, that is, the type should not be limited to these. In step S704, the RNC responds to the cell update message, that is, the RNC sends a cell update response message (or a cell update confirm message) to the UE. The cell update response message includes configuration information of the physical channel(s) (i.e. configuration parameters of the physical channel(s)). In step S706, the UE pre-configures the physical channel(s) according to the configuration parameters of the physical channel(s) contained in the cell update response message, and performs physical layer synchronization with the Node B. In this way, the physical channel(s) is configured.

In addition, in step S704, the RNC may optionally send the configuration parameters of the physical channel(s) in other message, such as other signaling for controlling radio resources, instead of the cell update response message (or cell update confirm message) transmitted to the UE.

Figure 8 is a flow chart illustrating the process for radio bearer setup based on the process as shown in Figure 7, after the UE has configured the physical channel(s). As shown in Figure 8, in step S802, the UE sends an initial direct transfer message to the RNC. In step S804, the RNC sends an initial UE message to the CN. In step S806, after performing the process such as authentication and authorization with the UE, the CN sends to the RNC an RAB configuration request message containing information of radio bearer setup or radio bearer reconfiguration. In step S808, in response to the RAB configuration request message, the RNC sends to the UE a radio bearer (RB) setup message or RB reconfiguration message containing information of RB configuration. In step S810, the UE configures the radio bearer according to the information of RB configuration, and need not to perform physical layer synchronization with the node B. In this way, the radio bearer is set up or configured. Optionally, after the above steps, the UE may send to the RNC an RB setup complete message or RB reconfiguration complete message, to notify the RNC that the radio bearer has been set up or reconfigured. The RNC sends an RAB configuration response message to the CN. Figure 9 shows a flow chart illustrating the particular signaling for establishing the physical channel and the radio bearer thereof.

In particular, to enable the UE to carry the type information of a CS domain call in the cell update message, an information element of "Call Type" is added in the cell update message in the embodiment, as shown in the following Table 1. Of course, the invention should not be limited to table 1.

**Table 1**

| **Information Element/Group name** | **Need** | **Multi** | **Type and reference** | **Semantics description** | **Version** |
|---|---|---|---|---|---|
| Message Type | MP | | Message Type | | |
| **UE information elements** | | | | | |
| U-RNTI | MP | | U-RNTI 10.3.3.47 | | |
| RRC transaction identifier | CV-*Fail ure* | | RRC transaction identifier 10.3.3.36 | | |
| Integrity check into | CH | | Integrity check info 10.3.3.16 | | |
| START list | MP | 1 to <maxC Ndomains> | | START [40] values for all CN domains. | |
| >CN domain identity | MP | | CN domain identity 10.3.1.1 | | |
| >START | MP | | START 10.3.3.38 | START value to be used in this CN domain. | |
| AM_RLC error indication(RB2, RB3 or RB4) | MP | | Boolean | TRUE indicates AM_RLC unrecoverable error [16] occurred on RB2, RB3 or RB4 in the UE | |
| AM_RLC error indication(RB>4) | MP | | Boolean | TRUE indicates AM_RLC unrecoverable error [16] occurred on RB>4 in the UE | |
| Cell update cause | MP | | Cell update cause 10.3.3.3 | | |
| Traffic volume indicator | OP | | Enumerated (true) | This IE shall be set to TRUE when the criteria for event based traffic volume measurement reporting is fulfilled. Absence of this element means not fulfilled. | Rel-6 |
| Failure cause | OP | | Failure cause and error information 10.3.3.14 | | |
| RB timer indicator | MP | | RB timer indicator 10.3.3.28 | | |
| Establishment cause | OP | | Establishment cause 10.3.3.11 | | Rel-5 |
| Call type | OP | | Enumerated (CS speech, CS video, other) | One spare value is needed | REL-6 |
| Recontiguration Status Indicator | OP | | Enumerated (true) | TRUE indicates a reconfiguration procedure is ongoing within the UE or a response message has been submitted to RLC and the UE is waiting for the layer 2 ACK. | Rel-6 |
| Measurement information elements | | | | | |
| Measured results on RACH | OP | 10.3.7.45 | Measured results on RACH 10.3.7.45 | | |

As can be seen from the Table 1, the information element (IE) "Call Type" defines two types of services including CS Speech and CS Video (as shown in the bold words in the Table 1) and other types of services. When the purpose of initiating a cell update by the UE is to establish any one of the two services (or multiple services), the IE is required to be included, and the value of the IE is set to a value corresponding to the service type to be established.

In addition, after receiving the cell update message, the RNC may judge the service type to be established by the UE according to the IE and the value of the IE, decide to pre-configure the physical channel of the radio bearer corresponding to the service type according to the state of the current resources of the system, and transfer the information of pre-configuration to the UE by using a cell update response message or cell update confirm message (or other signaling for controlling radio resources).

### Second Embodiment

The second embodiment of the invention is different from the first embodiment in that: the UE sends a Universal terrestrial Radio Access network registration area Update (URA update) message to the RNC in step S702 and the RNC sends to the UE a URA update response message (or URA update confirm message) in step S804. Except for the above differences, the second embodiment of the invention is the same as the first embodiment. The process of the second embodiment is similar to that of the first embodiment, and is not described herein.

In the second embodiment of the invention, to enable the UE to carry the type information of a CS domain call in the URA update message, an information element of "Call Type" is added in the URA update message in the embodiment, as shown in the following Table 2. The invention should not be limited to table 2.

**Table 2**

| **Information Element/Group name** | **Need** | **Multi** | **Type and reference** | **Semantics description** |
|---|---|---|---|---|
| Message Type | MP | | Message Type | |
| **UE information elements** | | | | |
| U-RNTI | MP | | U-RNTI 10.3.3.47 | |
| RRC transaction identifier | CV-*ProtErr* | | RRC transaction identifier 10.3.3.36 | |
| Integrity check info | CH | | Integrity check info 10.3.3.16 | |
| URA update cause | MP | | URA update cause 10.3.3.46 | |
| **Call type** | **OP** | | **Enumerated (CS speech, CS video, other)** | **One spare value is needed** |
| Protocol error indicator | MD | | Protocol error indicator 10.3.3.27 | Default value is FALSE |
| **Other information elements** | | | | |
| Protocol error information | CV-*P rotErr* | | Protocol error information 10.3.8.12 | |

As can be seen from the Table 2, the information element (IE) "Call Type" defines two types of services including CS Speech and CS Video and other types of services. When the purpose of initiating a URA update by the UE is to establish either one of the two services, the IE is required to be included, and the value of the IE is set to a value corresponding to the service type to be established.

In addition, after receiving the URA update message, the RNC may judge the service type to be established by the UE according to the IE and the value of the IE, decide to pre-configure the physical channel of the radio bearer corresponding to the service type according to the state of the current resources of the system, and transfer the information of pre-configuration to the UE by using a URA update response message or URA update confirm message (or other signaling for controlling radio resources).

To be better understood by the skilled in the art, another embodiment is described below the process of initiating a CS domain call by the UE in the CELL_FACH status as an example.

### Third Embodiment

Figure 10 shows a flow chart illustrating the process of initiating a CS domain call by a UE in the CELL_FACH status.

First in step S1002, the UE sends an initial direct transfer message to the RNC. The initial direct transfer message contains type information of the voice call (e.g. CS Speech, CS Video), as well as information of Non Access Stratum (NAS). In other words, the initial direct transfer message is mainly transferred to carry the information of NAS to the core network (CN). Therefore the RNC transfers the information of NAS to the CN transparently without any processing.

In step S1004, the RNC transmits an initial UE message to the CN in response to the initial direct transfer message. The initial UE message contains the information of NAS. In step S 1006, the RNC sends a radio bearer reconfiguration message to the UE according to the type information of the voice call. The radio bearer reconfiguration message contains configuration information of channels. The configuration information of channels are the configuration information of the dedicated transfer channel and dedicated physical channel used by the signaling radio bearer (SRB) and circuit service radio bearer (CS RB). In addition, in step S1006, the RNC maps the SRB to the dedicated transfer channel.

In step S1008, in response to the radio bearer reconfiguration message, the UE configures the transfer channel and physical channel according to the configuration information of the channels included in the radio bearer reconfiguration message, and performs physical layer synchronization with the Node B. In step S1010, the UE performs an authentication and authorization with the CN. In step S1012, the CN sends to the RNC an RAB configuration request message containing the configuration information of the radio bearer for service data transmission.

In step S 1014, in response to the RAB configuration request message, the RNC sends to the UE a radio bearer setup message or radio bearer reconfiguration message containing configuration information of the radio bearer. In particular, the RNC instructs to set up the radio bearer asynchronously. In step S 1016, in response to the radio bearer setup message or radio bearer reconfiguration message, the UE configures the radio bearer according to the configuration information of the radio bearer contained in the message.

Thereafter, the UE may send a radio bearer setup complete message or radio bearer reconfiguration complete message to the RNC, notifying the RNC that the radio bearer has been set up. Then, the RCN may send an RAB configuration response message to the CN in response to the radio bearer setup complete message or radio bearer reconfiguration complete message.

To enable the UE to carry the type information of a CS domain call in the initial direct transfer message, the embodiment modifies the INITIAL DIRECT TRANSFER message in the existing standard TS25.331 v6.8.0 by adding an information element "Service Info" (service information), as shown in the following Table 3.

**Table 3**

| **Information Element/Group name** | **Need** | **Multi** | **Type and reference** | **Semantics description** | **Version** |
|---|---|---|---|---|---|
| Message Type | MP | | Message Type | | |
| **UE information** | | | | | |

| **elements** | | | | | |
|---|---|---|---|---|---|
| **Integrity check info** | **CH** | | Integrity check info 10.3.3.16 | | |
| **PLMN identity** | **OP** | | PLMN identity 10.3.1.11 | This IE indicates the PLMN to which the UE requests the signalling connection to be established. | |

| **CN information elements** | | | | | |
|---|---|---|---|---|---|
| **CN domain identity** | **MP** | | CN domain identity 10.3.1.1 | | |
| **Intra Domain NAS Node Selector** | **MP** | | Intra Domain NAS Node Selector 10.3.1.6 | | |
| **NAS message** | **MP** | | NAS message 10.3.1.8 | | |
| **START** | **OP** | | START 10.3.3.38 | START value to be used in the CN domain as indicated in the IE "CN domain identity". This IE shall always be present in this version of the protocol. | |
| **Establishment cause** | **OP** | | Establish ment cause 10.3.3.11 | | |
| **Service info** | **OP** | **Enumerated** | **Enumerated (Voice Service, Video Service, Voice and Video Service,SMS service , other)** | | |
| **Measurement information elements** | | | | | |
| **Measured results on RACH** | **OP** | | Measured results on RACH 10.3.7.45 | | |

| **Information Element/Group name** | **Need** | **Multi** | **Type and reference** | **Semantics description** | **Version** |
|---|---|---|---|---|---|
| **MBMS joined information** | **OP** | | | | |
| **>P-TMSI** | **OP** | | P-TMSI (GSMMAP) 10.3.1.13 | | |

As shown in Table 3, the information element (IE) "Service Info" defines some types of services, such as the voice service, the video service, the video call service, the short message service (SMS) service. When the purpose of initiating an Initial direct transfer by the UE is to establish any one of these services, the IE is required to be included, and the value of the IE is set to a value corresponding to the service type to be established.

In addition, after receiving the initial direct transfer message, the RNC may judge the service type to be established by the UE according to the IE and the value of the IE, decide to pre-configure the physical channel and/or physical channel mapped to the radio bearer, which corresponds to the service type, according to the state of the current resources of the system, and transfer the information of pre-configuration to the UE by using an radio bearer reconfiguration message (or other RRC signaling).

### Fourth Embodiment

Figure 12 is another signaling flow chart illustrating the process of initiating the CS domain call by a UE in the CELL_FACH status.

As shown in Figure 12, when the UE in an idle status initiates a CS domain call, the type information of the CS domain call may be carried in the initial direct transfer message to be transmitted to the RNC by the UE. In particular, the fourth embodiment is different from the third embodiment in that: in step S 1106 the configuration information contained in the radio bearer reconfiguration message is the configuration message of the dedicated transfer channel and dedicated physical channel used by the CS RB. In addition, as can be seen from the comparison of Figure 10 and Figure 12, the radio bearer setup message in the fourth embodiment also configures the dedicated transfer channel and dedicated physical channel used by the SRB, in addition to the radio bearer of CS domain. The two signaling messages indicated by the reference signs 8 and 9 in Figure 11, i.e. the radio bearer setup/radio bearer reconfiguration message transmitted to the UE by the RNC (asynchronously) and the radio bearer setup/radio bearer reconfiguration complete message transmitted to the RNC by the UE, are omitted. Therefore, the relay of call establishment is further reduced in the fourth embodiment. The steps in the fourth embodiment which are same as those in the third embodiment are omitted herein.

### Fifth Embodiment

Figure 13 is a flow chart illustrating a method for channel configuration according to the fifth embodiment of the invention. As shown in Figure 13, the method for channel configuration includes the following steps:

Step 1302: Type information of a call transmitted is received from a UE in a connection mode.

Step 1304: A channel(s) at network side is configured according to the type information of the call.

Step 1306: An initial UE message is transmitted to a CN according to the message.

Step 1308: The CN feeds back a radio access bearer assignment request message containing configuration information of the radio bearer for service data transmission after the CN authenticates and authorizes the received initial UE message.

In the fifth embodiment, the UE transmits the type information of the call by using the cell update message, the URA update message or the initial direct transfer message, etc. the type information of the call is the type information of the CS domain call including the type information of the CS domain voice service, the type information of the video call service or the type information of other services. In the fifth embodiment, the network side may obtain the particular type of the call after receiving the type information of the call, pre-allocate the physical channel resources of the network side according to the type of the call, and configure the channel asynchronously in the subsequent process of establishing the radio bearer of CS services. In this way, the time required for establishing the call by the UE is shortened, the complicity of the system is reduced, thereby avoiding the waste of the system resources. The particular process of the fifth embodiment is similar to those of the above embodiments, and is omitted herein.

### Sixth Embodiment

Figure 14 is a flow chart illustrating another method for channel configuration according to the sixth embodiment of the invention. As shown in Figure 14, the method for channel configuration includes the steps as follows:

Step 1402: A UE in a connection mode sends type information of a call to network side.

Step 1404: The UE configures a channel(s) of the UE according to the received configuration information of the channel(s) fed back by the network side.

In the sixth embodiment, the UE transmits the type information of the call by using the cell update message, the URA update message or the initial direct transfer message, etc. the type information of the call is the type information of the CS domain call including the type information of the CS domain voice service, the type information of the video call service or the type information of other services. The RNC feeds back the configuration information of the channels by suing the cell update response message/cell update confirm message, the URA update response message/ URA update confirm message, or the radio bearer reconfiguration message/radio bearer setup message. The UE configures the channel(s) of the UE when receiving the configuration message of the channel(s). In other words, the UE needs not to perform physical layer synchronization with the node B after receiving the radio bearer setup message/radio bearer reconfiguration message. That is, the radio bearer setup or radio bearer reconfiguration is performed asynchronously, so as to reduce the delay. The particular process of the sixth embodiment is similar to those of the above embodiments, and is omitted herein.

### Seventh Embodiment

Figure 15 is a schematic diagram illustrating the structure of a device for channel configuration according to the seventh embodiment of the invention. As shown in Figure 15, the device for channel configuration includes a receiving unit 151, a transmitting unit 152, a configuration information feedback unit 153 and a channel configuring unit 154. The receiving unit 151 is adapted to receive the type information of a call sent by a UE in a connection mode. The transmitting unit 152 is adapted to transmit an initial UE message to a core network according to the received type information of the call. The configuration information feedback unit 153 is adapted to authenticate and authorize the received initial UE message and feed back a radio access bearer assignment request message containing configuration information of the radio bearer for service data transmission. The channel configuring unit 154 is adapted to configure a channel(s) of the network side according to the type information of the call.

The functions of the units in the device are described in the steps of the above methods, and are omitted herein.

In the embodiment, when receiving the type information of the call transmitted from the UE in the connection mode, the RNC transmits an initial UE message to the CN according to the type information of the call. The CN authenticates and authorizes the received initial UE message, and feeds back to the RNC the radio access bearer assignment request message containing the configuration information of the radio bearer for service data transmission. The RNC configures the channel(s) of the network side according to the type information of the call. In the embodiment, the physical channel resources of the network side may be pre-allocated according to the type information of the call, and configured asynchronously in the subsequent process of establishing the radio bearer of the CS services. In this way, the time required for establishing the call by the UE is shortened, the complicity of the system is reduced, thereby avoiding the waste of the system resources.

### Eighth Embodiment

Figure 16 shows a schematic diagram illustrating the structure of a device for channel configuration according to the eighth embodiment of the invention. As shown in Figure 16, the device for channel configuration includes a transmitting unit 161 and a channel configuring unit 162. The transmitting unit 161 is adapted to transmit, in a connection mode, type information of a call to the network side. The channel configuring unit 162 is adapted to configure a channel(s) of the UE according to configuration information of the channel(s) fed back from the network side.

The functions of the units in the device are described in the steps of the above methods, and are omitted herein.

Similarly in the embodiment, the UE in the connection mode transmits the type information of a call to the network side. The network side feeds back the configuration information of the channel(s) according to the type information of the call. When receiving the configuration information of the channel(s), the UE configure the channel(s) according to the configuration information. When the UE receives the subsequent radio bearer setup/radio bearer reconfiguration message, the UE needs not to perform physical layer synchronization with the node B. In other words, the radio bearer setup or radio bearer reconfiguration is performed asynchronously, so as to reduce the delay.

### Ninth Embodiment

Figure 17 shows a schematic diagram illustrating the structure of a system for channel configuration according to the ninth embodiment of the invention. As shown in Figure 17, the system for channel configuration includes a transmitting unit 171, a receiving unit 172, an initial UE message transmitting unit 173, a configuration information feedback unit 174, a channel configuring unit 175, and a radio bearer setup/reconfiguration unit 176. The transmitting unit 171 is located at the UE, and is adapted to transmit, in a connection mode, type information of a call to the network side. The receiving unit 172 is located in the network side, and is adapted to receive the type information of the call and feed back configuration information of channel(s) according to the type information of the call. The initial UE message transmitting unit 173 is located at the network side, and is adapted to transmit an initial UE message to a core network according to the received type information of the call. The configuration information feedback unit 174 is located at the network side, and is adapted to authenticate and authorize the received initial UE message and feeding back a radio access bearer assignment request message containing configuration information of the radio bearer for service data transmission. The channel configuring unit 175 is located at the UE, and is adapted to configure a channel(s) according to the received configuration information of the channel(s). The radio bearer setup/reconfiguration unit 176 is located at the UE, and is adapted to set up or reconfigure the radio bearer according to the received configuration information of the radio bearer.

The functions of the units in the system are described in the steps of the above methods, and are omitted herein.

As can be seen from the above solutions according to above embodiments, the number of synchronization and channel establishing processes between the UE and Node B is reduced to one. The subsequent process of radio bearer setup for the CS services is performed asynchronously. In this way, the time required by the UE for establishing the call may be shortened and the satisfactory of the user may be improved.

In addition, in the embodiments of the invention the dedicated physical channel resources for CS service radio bearer are pre-established and are configured asynchronously when establishing subsequent CS service radio bearer. The time for UE call setup is shortened, the complicity of the system is reduced, thereby avoiding the waste of the radio resources.

The embodiments described above are only exemplary embodiments, and should not be construed as a limitation to the invention. A person of ordinary skill in the art will recognize that various modifications and variations may be made to the invention. Any modifications and variations within the principle of the invention shall fall within the protection scope of the invention.

## Claims

1. A method for channel configuration, **characterized by** comprising:
receiving, by a radio network controller, type information of a call transmitted by a user equipment in a connection mode; and
sending, by the radio network controller, configuration information of a channel to the user equipment according to the type information of the call;
wherein the type information of the call is transmitted by the user equipment by using a cell update message or a universal terrestrial radio access network registration area update message.

2. The method for channel configuration according to claim 1, **characterized in that** the type information of the call is type information of a circuit switched domain call comprising type information of circuit switched domain voice services and type information of circuit switched domain video call services.

3. The method for channel configuration according to claim 1, **characterized by** further comprising:
transmitting an initial user equipment message to a core network after receiving the type information of the call transmitted by the user equipment by using an initial direct transfer message; and
after authenticating and authorizing the initial user equipment message by the core network, feeding back, by the core network, a radio access bearer assignment request message containing configuration information of radio bearer for service data transmission.

4. A method for channel configuration, **characterized by** comprising:
transmitting, by a user equipment in a connection mode, type information of a call to a radio network controller; and
configuring, by the user equipment, a channel of the user equipment according to received configuration information of the channel fed back by the radio network controller;
wherein the type information of the call is transmitted by the user equipment by using a cell update message or a universal terrestrial radio access network registration area update message.

5. The method for channel configuration according to claim 4, **characterized in that** further comprising:
feeding back, by the radio network controller, configuration information of a channel to the user equipment according to the type information of the call.

6. The method for channel configuration according to claim 5, **characterized in that** the radio network controller feeds back the configuration information of the channel by using a cell update response message/ cell update confirm message, a universal terrestrial radio access network registration area update response message/ universal terrestrial radio access network registration area update confirm message, or a radio bearer reconfiguration message/ radio bearer setup message.

7. The method for channel configuration according to claim 6, **characterized in that** the user equipment does not perform physical layer synchronization with a base station after the user equipment receives the radio bearer reconfiguration message/ radio bearer setup message.

8. The method for channel configuration according to claim 4, **characterized by** further comprising:
transmitting, by the radio network controller, an initial user equipment message to core network according to the received initial direct transfer message;
after authenticating and authorizing the initial user equipment message by the core network, feeding back, by the core network to the radio network controller, a radio access bearer assignment request message containing configuration information of radio bearer for service data transmission;
transmitting, by the radio network controller, the configuration information of the radio bearer to the user equipment by using a radio bearer reconfiguration message/ radio bearer setup message; and
configuring, by the user equipment, the radio bearer according to the configuration information of the radio bearer.

9. The method for channel configuration according to claim 8, **characterized in that** the radio bearer reconfiguration message/ radio bearer setup message is established asynchronously.

10. A radio network controller for channel configuration, **characterized by** comprising:
means for receiving type information of a call transmitted by a user equipment in a connection mode; and
means for sending configuration information of a channel to the user equipment according to the type information of the call;
wherein the type information of the call is transmitted by the user equipment by using a cell update message or a universal terrestrial radio access network registration area update message.

11. The radio network controller for channel configuration according to claim 10, **characterized by** further comprising:
means for transmitting an initial user equipment message to a core network according to the type information of the call; and
means for authenticating and authorize the received initial user equipment message and feeding back a radio access bearer assignment request message containing configuration information of radio bearer for service data transmission.

12. A user equipment for channel configuration, **characterized by** comprising:
a transmitting unit (161), adapted to transmit, in a connection mode, type information of a call to a radio network controller; and
a channel configuring unit (162), adapted to configure a channel of the user equipment according to received configuration information of the channel fed back by the radio network controller;
wherein the type information of the call is transmitted by the transmitting unit by using a cell update message or a universal terrestrial radio access network registration area update message.

13. A system for channel configuration, **characterized by** comprising a user equipment and a radio network controller, wherein:
the user equipment is adapted to transmit, in a connection mode, type information of a call to a radio network controller and configure a channel of the user equipment according to received configuration information of the channel fed back by the radio network controller;
the radio network controller is adapted to receive type information of a call transmitted by the user equipment in a connection mode and send configuration information of a channel to the user equipment according to the type information of the call;
wherein the type information of the call is transmitted by the user equipment by using a cell update message or a universal terrestrial radio access network registration area update message.

## Patentansprüche

1. Verfahren zur Kanalkonfiguration, **dadurch gekennzeichnet, dass** es Folgendes umfasst:
Empfangen durch eine Funknetz-Steuereinheit von Typinformationen eines Anrufs, der von einem Anwendergerät in einem Verbindungsmodus gesendet wird; und
Senden durch die Funknetz-Steuereinheit von Konfigurationsinformationen eines Kanals zu dem Anwendergerät in Übereinstimmung mit den Typinformationen des Anrufs;
wobei die Typinformationen des Anrufs durch das Anwendergerät unter Verwendung einer Zellenaktualisierungsnachricht oder einer universellen terrestrischen Funkzugriffsnetz-Registrierungsbereich-Aktualisierungsnachricht gesendet werden.

2. Verfahren zur Kanalkonfiguration nach Anspruch 1, **dadurch gekennzeichnet, dass** die Typinformationen des Anrufs Typinformationen eines Anrufs im schaltungsvermittelten Bereich sind, die Typinformationen von Sprachdiensten im schaltungsvermittelten Bereich und Typinformationen von Videoanrufdiensten im schaltungsvermittelten Bereich umfassen.

3. Verfahren zur Kanalkonfiguration nach Anspruch 1, **dadurch gekennzeichnet, dass** es ferner Folgendes umfasst:
Senden einer anfänglichen Anwendergerätnachricht zu einem Kernnetz, nachdem die von dem Anwendergerät gesendeten Typinformationen des Anrufs empfangen worden sind, unter Verwendung einer anfänglichen Direktübertragungsnachricht; und
nach dem Authentifizieren und Autorisieren der anfänglichen Anwendergerätnachricht durch das Kernnetz Rückkoppeln durch das Kernnetz einer Funkzugriffsträger-Zuweisungsanforderungsnachricht, die Konfigurationsinformationen eines Funkträgers für Dienstdatenübertragung enthält.

4. Verfahren zur Kanalkonfiguration, **dadurch gekennzeichnet, dass** es Folgendes umfasst:
Senden durch ein Anwendergerät in einem Verbindungsmodus von Typinformationen eines Anrufs zu einer Funknetz-Steuereinheit; und
Konfigurieren durch das Anwendergerät eines Kanals des Anwendergeräts in Übereinstimmung mit empfangenen Konfigurationsinformationen des Kanals, die durch die Funknetz-Steuereinheit rückgekoppelt werden;
wobei die Typinformationen des Anrufs durch das Anwendergerät unter Verwendung einer Zellenaktualisierungsnachricht oder einer universellen terrestrischen Funkzugriffsnetz-Registrierungsbereich-Aktualisierungsnachricht gesendet werden.

5. Verfahren zur Kanalkonfiguration nach Anspruch 4, **dadurch gekennzeichnet, dass** es ferner Folgendes umfasst:
Rückkoppeln durch die Funknetz-Steuereinheit von Konfigurationsinformationen eines Kanals zu dem Anwendergerät in Übereinstimmung mit den Typinformationen des Anrufs.

6. Verfahren zur Kanalkonfiguration nach Anspruch 5, **dadurch gekennzeichnet, dass** die Funknetz-Steuereinheit die Konfigurationsinformationen des Kanals unter Verwendung einer Zellenaktualisierungs-Antwortnachricht/Zellenaktualisierungs-Bestätigungsnachricht, einer universellen terrestrischen Funkzugriffsnetz-Registrierungsbereich-Aktualisierungsantwortnachricht/einer universellen terrestrischen Funkzugriffsnetz-Registrierungsbereich-Aktualisierungsbestätigungsnachricht oder einer Funkträgerumkonfigurationsnachricht/Funkträger-Einrichtnachricht rückkoppelt.

7. Verfahren zur Kanalkonfiguration nach Anspruch 6, **dadurch gekennzeichnet, dass** das Anwendergerät eine Synchronisation der physikalischen Schicht mit einer Basisstation nicht ausführt, nachdem das Anwendergerät die Funkträgerumkonfigurationsnachricht/Funkträger-Einrichtnachricht empfangen hat.

8. Verfahren zur Kanalkonfiguration nach Anspruch 4, **dadurch gekennzeichnet, dass** es ferner Folgendes umfasst:
Senden durch die Funknetz-Steuereinheit einer anfänglichen Anwendergerätnachricht zu einem Kernnetz in Übereinstimmung mit der empfangenen anfänglichen Direktübertragungsnachricht;
nach dem Authentifizieren und Autorisieren der anfänglichen Anwendergerätnachricht durch das Kernnetz Rückkoppeln durch das Kernnetz zu der Funknetz-Steuereinheit einer Funkzugriffsträger-Zuweisungs-anforderungsnachricht, die Konfigurationsinformationen eines Funkträgers für Dienstdatenübertragung enthält;
Senden durch die Funknetz-Steuereinheit der Konfigurationsinformationen des Funkträgers zu dem Anwendergerät unter Verwendung einer Funkträgerumkonfigurationsnachricht/Funkträger-Einrichtnachricht; und
Konfigurieren durch das Anwendergerät des Funkträgers in Übereinstimmung mit den Konfigurationsinformationen des Funkträgers.

9. Verfahren zur Kanalkonfiguration nach Anspruch 8, **dadurch gekennzeichnet, dass** die Funkträgerumkonfigurationsnachricht/Funkträger-Einrichtnachricht asynchron aufgebaut wird.

10. Funknetz-Steuereinheit zur Kanalkonfiguration, **dadurch gekennzeichnet, dass** sie Folgendes umfasst:
Mittel zum Empfangen von Typinformationen eines Anrufs, die von einem Anwendergerät in einem Verbindungsmodus gesendet werden; und
Mittel zum Senden von Konfigurationsinformationen eines Kanals zu dem Anwendergerät in Übereinstimmung mit den Typinformationen des Anrufs;
wobei die Typinformationen des Anrufs durch das Anwendergerät unter Verwendung einer Zellenaktualisierungsnachricht oder einer universellen terrestrischen Funkzugriffsnetz-Registrierungsbereich-Aktualisierungsnachricht gesendet werden.

11. Funknetz-Steuereinheit zur Kanalkonfiguration nach Anspruch 10, **dadurch gekennzeichnet, dass** sie ferner Folgendes umfasst:
Mittel zum Senden einer anfänglichen Anwendergerätnachricht zu einem Kernnetz in Übereinstimmung mit den Typinformationen des Anrufs; und
Mittel zum Authentifizieren und Autorisieren der empfangenen anfänglichen Anwendergerätnachricht und Rückkoppeln einer Funkzugriffsträger-Zuweisungsanforderungsnachricht, die Konfigurationsinformationen eines Funkträgers für Dienstdatenübertragung enthält.

12. Anwendergerät zur Kanalkonfiguration, **dadurch gekennzeichnet, dass** es Folgendes umfasst:
eine Sendeeinheit (161), die dafür ausgelegt ist, in einem Verbindungsmodus Typinformationen eines Anrufs zu einer Funknetz-Steuereinheit zu senden; und
eine Kanalkonfigurationseinheit (162), die dafür ausgelegt ist, einen Kanal des Anwendergeräts in Übereinstimmung mit empfangenen Konfigurationsinformationen des Kanals, die durch die Funknetz-Steuereinheit rückgekoppelt werden, zu konfigurieren;
wobei die Typinformationen des Anrufs durch die Sendeeinheit unter Verwendung einer Zellenaktualisierungsnachricht oder einer universellen terrestrischen Funkzugriffsnetz-Registrierungsbereich-Aktualisierungsnachricht gesendet werden.

13. System zur Kanalkonfiguration, **dadurch gekennzeichnet, dass** es ein Anwendergerät und eine Funknetz-Steuereinheit umfasst, wobei:
das Anwendergerät dafür ausgelegt ist, in einem Verbindungsmodus Typinformationen des Anrufs zu der Funknetz-Steuereinheit zu senden und einen Kanal des Anwendergeräts in Übereinstimmung mit empfangenen Konfigurationsinformationen des Kanals, die durch die Funknetz-Steuereinheit rückgekoppelt werden, zu konfigurieren;
die Funknetz-Steuereinheit dafür ausgelegt ist, die Typinformationen des Anrufs, die durch das Anwendergerät in dem Verbindungsmodus gesendet werden, zu empfangen und Konfigurationsinformationen des Kanals zu dem Anwendergerät in Übereinstimmung mit den Typinformationen des Anrufs zu senden;
wobei die Typinformationen des Anrufs durch das Anwendergerät unter Verwendung einer Zellenaktualisierungsnachricht oder einer universellen terrestrischen Funkzugriffsnetz-Registrierungsbereich-Aktualisierungsnachricht gesendet werden.

## Revendications

1. Procédé permettant de configurer un canal, **caractérisé en ce qu'**il comprend les étapes consistant à :
recevoir, par un contrôleur de réseau de radiocommunication, des informations sur le type d'un appel transmises par un équipement d'utilisateur dans un mode de connexion ; et
envoyer à l'équipement d'utilisateur, par le contrôleur de réseau de radiocommunication, des informations sur la configuration d'un canal en fonction des informations sur le type de l'appel ;
les informations sur le type de l'appel étant transmises par l'équipement d'utilisateur au moyen d'un message de mise à jour de cellule ou d'un message de mise à jour de zone d'enregistrement de réseau d'accès radio terrestre universel.

2. Procédé permettant de configurer un canal selon la revendication 1, **caractérisé en ce que** les informations sur le type de l'appel sont des informations sur le type d'un appel du domaine à commutation de circuits comprenant des informations sur le type de services de communication vocale du domaine à commutation de circuits et des informations sur le type de services d'appel vidéo du domaine à commutation de circuits.

3. Procédé permettant de configurer un canal selon la revendication 1, **caractérisé en ce qu'**il comprend en outre les étapes consistant à :
transmettre à un réseau central un message initial d'équipement d'utilisateur après réception des informations sur le type de l'appel transmises par l'équipement d'utilisateur au moyen d'un message initial de transfert direct ; et
après authentification et autorisation du message initial d'équipement d'utilisateur par le réseau central, renvoyer, par le réseau central, un message de demande d'affectation de support d'accès radio contenant des informations sur la configuration d'un support radio pour la transmission de données de services.

4. Procédé permettant de configurer un canal, **caractérisé en ce qu'**il comprend les étapes consistant à :
transmettre à un contrôleur de réseau de radiocommunication, par un équipement d'utilisateur dans un mode de connexion, des informations sur le type d'un appel; et configurer, par l'équipement d'utilisateur, un canal de l'équipement d'utilisateur en fonction d'informations reçues sur la configuration du canal renvoyées par le contrôleur de réseau de radiocommunication ;
les informations sur le type de l'appel étant transmises par l'équipement d'utilisateur au moyen d'un message de mise à jour de cellule ou d'un message de mise à jour de zone d'enregistrement de réseau d'accès radio terrestre universel.

5. Procédé permettant de configurer un canal selon la revendication 4, **caractérisé en ce qu'**il comprend en outre l'étape consistant à :
renvoyer, par le contrôleur de réseau de radiocommunication, des informations sur la configuration d'un canal à l'équipement d'utilisateur en fonction des informations sur le type de l'appel.

6. Procédé permettant de configurer un canal selon la revendication 5, **caractérisé en ce que** le contrôleur de réseau de radiocommunication renvoie les informations sur la configuration du canal au moyen d'un message de réponse de mise à jour de cellule /message de confirmation de mise à jour de cellule, d'un message de réponse de mise à jour de zone d'enregistrement de réseau d'accès radio terrestre universel / message de confirmation de mise à jour de zone d'enregistrement de réseau d'accès radio terrestre universel ou d'un message de reconfiguration de support radio / message d'établissement de support radio.

7. Procédé permettant de configurer un canal selon la revendication 6, **caractérisé en ce que** l'équipement d'utilisateur ne procède pas à une synchronisation de la couche physique avec une station de base après avoir reçu le message de reconfiguration de support radio / message d'établissement de support radio.

8. Procédé permettant de configurer un canal selon la revendication 4, **caractérisé en ce qu'**il comprend en outre les étapes consistant à :
transmettre à un réseau central, par le contrôleur de réseau de radiocommunication,
un message initial d'équipement d'utilisateur en fonction du message initial de transfert direct reçu ;
après authentification et autorisation du message initial d'équipement d'utilisateur par le réseau central, renvoyer au contrôleur de réseau de radiocommunication, par le réseau central, un message de demande d'affectation de support d'accès radio contenant des informations sur la configuration d'un support radio pour la transmission de données de services,
transmettre à l'équipement d'utilisateur, par le contrôleur de réseau de radiocommunication, les informations sur la configuration du support radio au moyen d'un message de reconfiguration de support radio / message d'établissement de support radio ; et
configurer, par l'équipement d'utilisateur, le support radio en fonction des informations sur la configuration du support radio.

9. Procédé permettant de configurer un canal selon la revendication 8, **caractérisé en ce que** le message de reconfiguration de support radio / message d'établissement de support radio est établi de manière asynchrone.

10. Contrôleur de réseau de radiocommunication permettant de configurer un canal, **caractérisé en ce qu'**il comprend :
un moyen pour recevoir des informations sur le type d'un appel transmises par un équipement d'utilisateur dans un mode de connexion ; et
un moyen pour envoyer à l'équipement d'utilisateur des informations sur la configuration d'un canal en fonction des informations sur le type de l'appel ;
les informations sur le type de l'appel étant transmises par l'équipement d'utilisateur au moyen d'un message de mise à jour de cellule ou d'un message de mise à jour de zone d'enregistrement de réseau d'accès radio terrestre universel.

11. Contrôleur de réseau de radiocommunication permettant de configurer un canal selon la revendication 10, **caractérisé en ce qu'**il comprend en outre :
un moyen pour transmettre à un réseau central un message initial d'équipement d'utilisateur en fonction des informations sur le type de l'appel ; et
un moyen pour authentifier et autoriser le message initial d'équipement d'utilisateur reçu et pour renvoyer un message de demande d'affectation de support d'accès radio contenant des informations sur la configuration d'un support radio pour la transmission de données de services.

12. Equipement d'utilisateur permettant de configurer un canal, **caractérisé en ce qu'**il comprend :
une unité de transmission (161), conçue pour transmettre, dans un mode de connexion, à un contrôleur de réseau de radiocommunication, des informations sur le type d'un appel; et
une unité de configuration de canal (162), conçue pour configurer un canal de l'équipement d'utilisateur en fonction d'informations reçues sur la configuration du canal renvoyées par le contrôleur de réseau de communication ;
les informations sur le type de l'appel étant transmises par l'unité de transmission au moyen d'un message de mise à jour de cellule ou d'un message de mise à jour de zone d'enregistrement de réseau d'accès radio terrestre universel.

13. Système permettant de configurer un canal, **caractérisé en ce qu'**il comprend un équipement d'utilisateur et un contrôleur de réseau de radiocommunication,
l'équipement d'utilisateur étant conçu pour transmettre, dans un mode de connexion, au contrôleur de réseau de radiocommunication, des informations sur le type d'un appel, et pour configurer un canal de l'équipement d'utilisateur en fonction d'informations reçues sur la configuration du canal renvoyées par le contrôleur de réseau de communication ;
le contrôleur de réseau de radiocommunication étant conçu pour recevoir les informations sur le type de l'appel transmises par l'équipement d'utilisateur dans le mode de connexion, et pour envoyer à l'équipement d'utilisateur des informations sur la configuration du canal en fonction des informations sur le type de l'appel ;
les informations sur le type de l'appel étant transmises par l'équipement d'utilisateur au moyen d'un message de mise à jour de cellule ou d'un message de mise à jour de zone d'enregistrement de réseau d'accès radio terrestre universel.
